# EUROPÄISCHE PATENTANMELDUNG

(11) **EP 1 698 841 A2**
(43) Veröffentlichungstag der Anmeldung: **06.09.2006**
(21) Anmeldenummer: 06003236.4
(22) Anmeldetag: 17.02.2006
(51) Int. Cl.: F24J 2/54, F24J 2/04

(54) **Industrie- oder Gewerbebauwerk mit Solarkollektoren**

(30) Priorität: 25.02.2005 DE 102005009288
(71) Anmelder: Unterholzner, Matthias, 84163 Marklkofen/Poxau (DE)
(72) Erfinder: Unterholzner, Matthias, 84163 Marklkofen/Poxau (DE)
(74) Vertreter: Pausch, Thomas Ernst

(57) **Zusammenfassung**

Die Erfindung betrifft ein Industrie- oder Gewerbebauwerk, insbesondere Messe- oder Fertigungshalle (1), Bürcbau, Großkaufhaus oder dergleichen Gebäude, dessen Dachkonstruktion (2) als Vorrichtung zur Abstützung mehrerer Solarkollektoren (3) ausgebildet ist und die Dachkonstruktion (2) eine um eine zentrale Schwenkachse (4) schwenkbar gelagerte Plattform (5) aufweist, auf welcher Plattform (5) die Solarkollektoren (3) abgestützt sind.

## Beschreibung

Die Erfindung betrifft ein Industrie- oder Gewerbebauwerk, insbesondere Messe-, Lager- oder Fertigungshalle, Bürobau, Großkaufhaus oder dergleichen Gebäude, dessen Dachkonstruktion als Vorrichtung zur Abstützung mehrerer Solarkollektoren ausgebildet ist. Solarkollektoren können hierbei sowohl Fotovoltaik- als auch solarthermische Module sein.

Derartige Solarkollektoren, insbesondere in Form von Fotovoltaikmodulen oder auch solarthermischen Modulen sind aus dem Stand der Technik hinreichend bekannt; solche Module werden häufig auf Dächern oder Fassaden von Gebäuden angeordnet. Zur Verbesserung der Ausbeute der gewonnenen Sonnenenergie sind aus dem Stand der Technik ferner Sonnenstandnachführungseinrichtungen bekannt, die eine optimale Stellung der Solarkollektoren zur Sonne in Abhängigkeit der Jahres- oder Tageszeit steuern. In diesem Zusammenhang zeigt etwa die DE 101 44 601 ein Gestell, das einen Arm aufweist, der einseitig jeweils einen Solarkollektor trägt, wobei dieser Arm um eine horizontale Achse verschwenkbar ausgebildet ist, und diese Achse Bestandteil eines weiteren Gestells ist, das um eine vertikale Achse verdrehbar ist. In ähnlicher Weise ist das Prinzip eines Sonnennachführungssystems für Sonnenkollektoren beispielsweise aus dem Gebrauchsmuster DE 201 04 306 ausgebildet.

Bekanntermaßen sind insbesondere Fotovoltaik-Elemente sehr teuer. Eine Anlage mit Solarkollektoren rechnet sich im wirtschaftlichen Sinne erst ab einer bestimmten Größe, d. h. einer bestimmten Fläche. Die bereits zuvor genannten bekannten Vorrichtungen zur Aufnahme und Nachführung von Solarkollektoren sind nicht geeignet, um eine Vielzahl von Solarkollektoren aufzunehmen, mithin eine große Flächenform von Solarkollektoren bereitzustellen.

Bei anderen im Stand der Technik bekannten Solarkollektoranlagen mit Sonnenstandnachführungseinrichtungen ist die Bauhöhe aufgrund der Gesamtkonstruktion in Form eines großen Segels hoch, wodurch solche Anlagen gegenüber größeren Windlasten nicht stabil genug sind. Solche Anlagen sind somit zur Anwendung auf dem Dach eines Industrie- oder Gewerbebauwerks wie beispielsweise einer Lagerhalle nicht geeignet.

Der vorliegenden Erfindung liegt die Aufgabe zugrunde, eine Vorrichtung bzw. eine Kombination einer eine Sonnenstandnachführungseinrichtung aufweisende Solarkollektoranlage mit einer Messe-, Lager- oder Fertigungshalle, Bürobau, Großkaufhaus oder dergleichen industriell oder gewerblich nutzbaren (Groß-) Gebäude bzw. Dachkonstruktion anzugeben, wobei die Gesamtkonstruktion auch gegenüber extremeren Windlasten hinreichend stabil ist.

Diese Aufgabe wird durch ein Industrie- oder Gewerbebauwerk gemäß Anspruch 1 gelöst.

Erfindungsgemäß ist ein Industrie- oder Gewerbebauwerk, insbesondere Messe-, Lager- oder Fertigungshalle, Bürobau, Großkaufhaus oder dergleichen Gebäude, dessen Dachkonstruktion als Vorrichtung zur Abstützung mehrerer Solarkollektoren ausgebildet ist, vorgesehen, welches sich dadurch auszeichnet, dass die Dachkonstruktion eine um eine zentrale Schwenkachse schwenkbar gelagerte Plattform aufweist, auf welcher Plattform die Solarkollektoren abgestützt sind.

Dem Prinzip der Erfindung folgend kann hierbei vorgesehen sein, dass die Plattform einen im wesentlichen in der Mitte der Dachkonstruktion gelagerten Drehkranz aufweist, welcher auf der äusseren Seite auf Rollen abgestützt ist. Von Vorteil ist der Antrieb des Drehkranzes gleichfalls im wesentlichen in der Mitte der Dachkonstruktion angeordnet.

Bei einer besonders bevorzugten Ausführung der Erfindung kann vorgesehen sein, dass eine Vielzahl von Solarkollektoren zu einer auf mehreren Reihen aufgeständerten Modulanordnung angeordnet sind, wobei die Solarkollektoren einer zusammengehörenden Reihe über ein Gestänge miteinander gekoppelt sind, und mit einem auf das Gestänge wirkenden Antrieb gemeinsam verstellbar sind.

Bei einer konstruktiv besonders vorteilhaften Ausführung der Erfindung ist die gesamte Dachkonstruktion bzw. die Plattform um einen Vollwinkel von 360° schwenkbar gelagert.

Die weiteren Unteransprüche beinhalten weitere vorteilhafte Ausführangsformen bzw. Ausgestaltungen der Erfindung.

Weitere Vorteile, Zweckmäßigkeiten und Merkmale der Erfindung ergeben sich aus der nachfolgenden Beschreibung eines Ausführungsbeispiels anhand der Zeichnung. Es zeigt:
- FIG. 1: in schematischer Darstellung eine Daraufsicht auf ein Industrie- oder Gewerbebauwerk mit mehreren in einer Reihe geschalteten Solarkollektoren nach dem bevorzugten Ausführungsbeispiel der Erfindung:
- FIG. 2A und 2B: schematische Seitenansichten des Ausfüh-rungsbeispiels; und
- FIG. 3: eine schematische Ansicht einer Einzelheit des erfindungsgemäßen Ausführungsbeispiels.

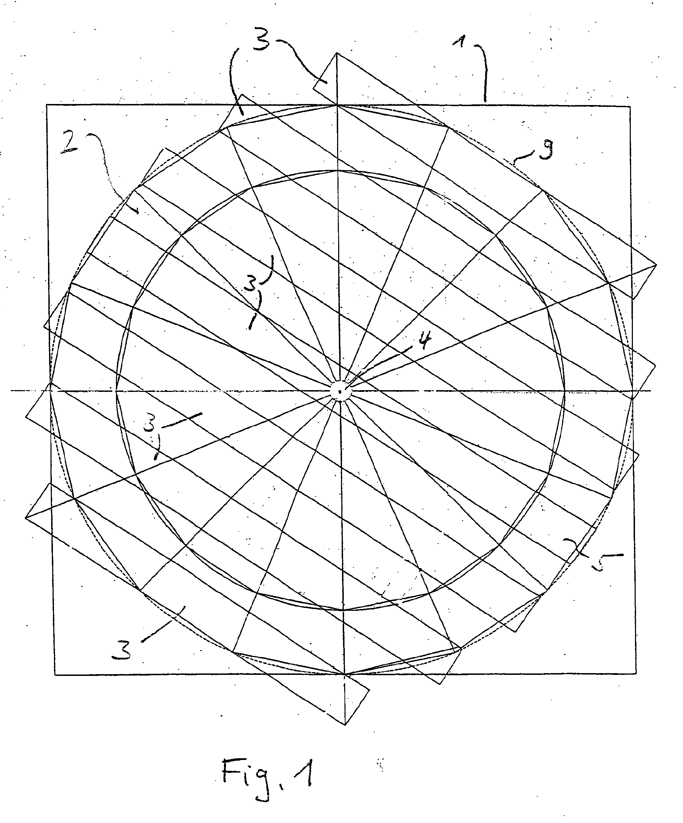

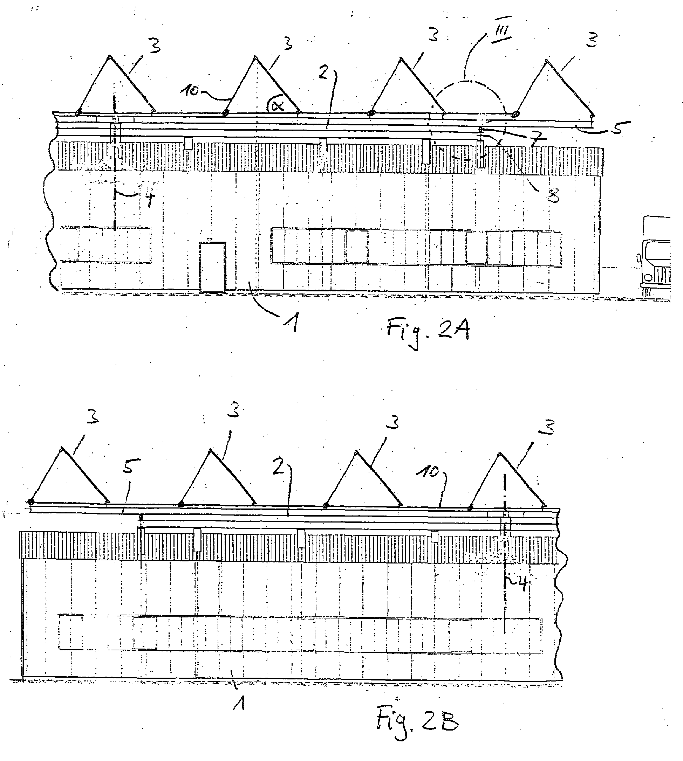

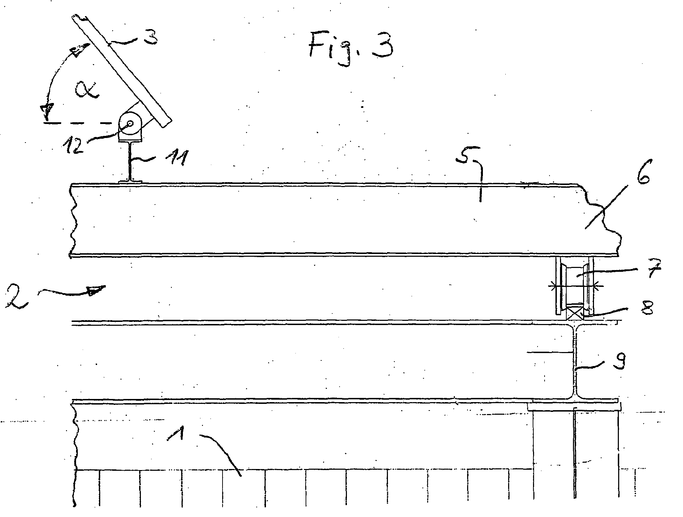

Das in den Figuren dargestellte Ausführungsbeispiel der Erfindung umfasst eine Messe- oder Fertigungshalle 1 mit einer Dachkonstruktion 2, welche als Vorrichtung zur Abstützung mehrerer Solarkollektoren 3 ausgebildet ist. Die Dachkonstruktion 2 besitzt eine um eine zentrale Schwenkachse 4 schwenkbar gelagerte Plattform 5, auf welcher Plattform 5 die einzelnen Solarkollektoren 3 abgestützt sind. Die Plattform 5 weist einen im Wesentlichen in der Mitte der Dachkonstruktion 2 gelagerten Drehkranz auf, der auf der äußeren Seite 6 auf Rollen 7 abgestützt ist. Die Rollen 7 laufen auf einer Führungsschiene 8, die auf einem 1-Trägerteil 9 der Dachkonstruktion 2 in einem Kreis verlegt sind. Ein elektromotorischer oder hydraulischer Antrieb des Drehkranzes bzw. der Plattform 5 ist in den Figuren nicht näher dargestellt, und ist in unmittelbarer Nähe der zentralen Schwenkachse 4, jedenfalls im Wesentlichen in der Mitte der Dachkonstruktion 2 angeordnet. Die Figuren 1 und 2 zeigen das erfindungsgemäße Ausführungsbeispiel eines Industrie- oder Gewerbebauwerkes 1 jeweils in Gesamtansicht, wobei FIG. 2A den rechten Teil des Bauwerkes, und FIG. 2B entsprechend den linken Teil des Bauwerkes zeigt, während FIG. 3 eine Seitenansicht in vergrößerter Darstellung der Einzelheit III aus FIG. 2A wiedergibt.

Insbesondere aus der Draufsicht gemäß FIG. 1 ist näher ersichtlich, dass mehrere Solarkollektoren 3 zu einer auf mehrere Reihen aufgeständerte Modulanordnung angeordnet sind, wobei die Solarkollektoren 3 einer zusammengehörenden Reihe über ein Gestänge 10 miteinander gekoppelt sind. Über einen vorzugsweise elektromotorischen, in den Figuren jedoch nicht näher dargestellten Antrieb, der auf das Gestänge 10 einwirkt, ist der Neigungswinkel a aller Solarkollektoren einer zusammengehörenden Reihe gleichzeitig und automatisiert einstellbar bzw. verstellbar. Die Solarkollektoren 3 sind an ihren unteren Enden über fest mit der Plattform 5 angeordnete Lagerböcke 11, um eine Achse 12 schwenkbar gelagert.

Die gesamte Dachkonstruktion 2 bzw. die Plattform 5 kann um die Schwenkachse 4 innerhalb eines Vollwinkels von 360° geschwenkt werden. Somit kann entsprechend der Tageszeit die gesamte Dachkonstruktion 2 bzw. die Plattform 5 der Sonne nachgeführt werden; darüber hinaus kann durch Einstellen der Neigungswinkel α der einzelnen Solarkollektoren der Einstrahlwinkel der Sonne auf die Solarkolloktoren 3 optimal eingestellt werden, so dass auf diese Weise optimale Erträge von Solarenergie erzielt werden können.

Aufgrund der vergleichsweise geringen Bauhöhe der erfindungsgemäßen Dachkonstruktion, die eine flächenmäßige Erstreckung von 40m x 40m und wesentlich darüber haben kann, sind die auf die Dachkonstruktion wirkenden Windlasten überschaubar, so dass das erfindungsgemäße Bauwerk mit den Solarkollektoren selbst in vergleichsweise großer Gebäudehöhe angebracht werden kann, und höheren Windgeschwindigkeiten ausgesetzt werden kann.

Die nach der Erfindung besonders bevorzugten Anwendungen sind Industrie- oder Gewerbehallenkonstruktionen mit einer Dachkonstruktion entsprechend der Erfindung, d. h. Kombination einer Halle mit einem Aufbau von nachgeführten Fotovoltaikanlagen im Sinne der Erfindung.

Eine Dachkonstruktion nach der Erfindung kann hierbei auch ein Fhachdach bzw. ein Foliendach umfassen. Des weiteren umfasst der Begriff Dachkonstruktion auch solche ohne Gebäude, also beispielsweise freitragende Konstruktionen mit Stützen, oder Unterstellkonstruktionen ohne geschlossene Seitenwinde, wie etwa Unterstellhallen, Carports oder dergleichen offene Bauwerke.

## Patentansprüche

1. Industrie- oder Gewerbebauwerk, insbesondere Messe-, Lager- oder Fertigungshalle (1), Bürobau, Großkaufhaus oder dergleichen Gebäude, dessen Dachkonstruktion (2) als Vorrichtung zur Abstützung mehrerer Solarkollektoren (3) ausgebildet ist,
**dadurch gekennzeichnet, dass**
die Dachkonstruktion (2) eine um eine zentrale Schwenkachse (4) schwenkbar gelagerte Plattform (5) aufweist, auf welcher Plattform (5) die Solarkollektoren (3) abgestützt sind.

2. Industrie- oder Gewerbebauwerk nach Anspruch 1, **dadurch gekennzeichnet, dass** die Plattform (5) einen im wesentlichen in der Mitte der Dachkonstruktion (2) gelagerten Drehkranz aufweist, welcher auf der äusseren Seite auf Rollen (7) abgestützt ist.

3. Industrie _ oder Gewerbebauwerk nach Anspruch 2, **dadurch gekennzeichnet, dass** der Antrieb des Drehkranzes gleichfalls im wesentlichen in der Mitte der Dachkonstruktion (2) angeordnet ist.

4. Industrie- oder Gewerbebauwerk nach einem der vorhergehenden Ansprüche, **dadurch gekennzeichnet, dass** mehrere Solarkollektoren (3) zu einer auf mehrere Reihen aufgeständerte Modulanordnung angeordnet sind, wobei die Solarkollektoren (3) einer zusatnmengehöreridcn Reihe über ein Gestänge (10) miteinander gekoppelt sind, und mit einem auf das Gestänge (10) wirkenden Antrieb gemeinsam verstellbar sind.

5. Industrie- oder Gewerbebauwerk nach einem der vorhergehenden Ansprüche, **dadurch gekennzeichnet, dass** die gesamte Dachkonstruktion (2) bzw. die Plattform (5) um einen Vollwinkel von 360° schwenkbar gelagert ist.

6. Industrie- oder Gewerbebauwerk nach einem der vorhergehenden Ansprüche, **dadurch gekennzeichnet, dass** die Neigung der auf der Plattform (5) abgestützten Solarkollektoren (3) vermittels dem elektromotorisch angetriebenen Gestänge (10) im Sinne einer selbsttätigen Nachführung entsprechend dem Sonnenstand einstellbar ist.
